# EUROPEAN PATENT SPECIFICATION

(11) **EP 3 348 906 B1**
(45) Date of publication and mention of the grant of the patent: **16.10.2019**
(21) Application number: 17206499.0
(22) Date of filing: 11.12.2017
(51) Int. Cl.: F23R 3/28, F23R 3/14, F23R 3/30, F23D 11/10, F23D 11/38

(54) **GAS TURBINE FUEL INJECTOR**
GASTURBINENKRAFTSTOFFEINSPRITZER
INJECTEUR DE CARBURANT DE TURBINE À GAZ

(30) Priority: 11.01.2017 GB 201700459
(43) Date of publication of application: 18.07.2018
(73) Proprietor: Rolls-Royce plc, London SW1E 6AT (GB)
(72) Inventor: Witham, Frederic, Derby, Derbyshire DE24 8BJ (GB); Ballantyne, Steven, Derby, Derbyshire DE24 8BJ (GB); Gregory, Jonathan, Derby, Derbyshire DE24 8BJ (GB); Caruso, Mike, Derby, Derbyshire DE24 8BJ (GB); Harding, Stephen, Derby, Derbyshire DE24 8BJ (GB)
(74) Representative: Rolls-Royce plc

(56) References cited:
- EP-A1- 3 115 692
- US-A1- 2010 095 677
- US-B1- 6 543 235

## Description

The present invention concerns fuel injectors used for providing fuel to the combustion chamber of a gas turbine engine. More particularly, the fuel injector is of a jet-in-crossflow type.

The document EP 3 115 692 A1, which represents prior art under Article 54(3) EPC, discloses a fuel injector having a jet-in-crossflow arrangement.

In a gas turbine engine, fuel is mixed with air prior to delivery into a combustion chamber where the mixture is ignited. Arrangements for mixing the fuel and air vary. In prefilming arrangements, fuel is formed in a film along a prefilmer surface adjacent to a nozzle. Pressurised, turbulent air streams are directed against the prefilmer surface and serve to shear fuel from the surface and mix the sheared fuel into the turbulent air streams. In vaporiser designs fuel is forced through a small orifice into a more cavernous air filled chamber. The sudden pressure drop and acceleration of the fuel flow upon entering the chamber disperses the fuel into a spray. High temperatures subsequently vaporise the fuel. Turbulent air flows in the chamber again encourage mixing.

Both methods have associated advantages and disadvantages. Prefilming fuel injectors have highly complex and intricate designs that are expensive to manufacture. Design iterations are slow, due to complexity of the manufacturing process. Whilst relatively simple in design and generally cheaper in manufacture, vaporiser fuel injectors provide inferior fuel preparation when compared to prefilming fuel injectors thereby resulting in inferior engine performance.

Jet in crossflow is an air blast technique wherein the energy for atomisation is primarily provided by an airstream encountered by a fuel jet. The fuel is rapidly distributed over a range of radii, giving an opportunity for improved fuel/air mixing; and the mechanical design of the injector is simpler, permitting a reduction in manufacturing cost. A fuel passage is arranged centrally of an annular air swirler. Air flows generally from upstream to downstream in a direction substantially parallel with the fuel passage. The swirler imparts a spin on the air such that it spirals through the air swirler. One or more outlets of the fuel passage are arranged inclined to the flow direction of swirled air passing the outlet. The outlet is configured to deliver the fuel as a jet which crosses the swirled air flow. Walls of the swirler passages in the air swirler may be radially convergent in a manner which directs the exiting air flow towards the fuel passage outlet to encourage mixing of the fuel and air in the outlet chamber and minimise filming of fuel on walls of the air swirler. The configuration ensures maximal atomisation of the fuel as it joins the relatively high velocity air stream.

EP3115692 relates to a fuel spray nozzle comprises a fuel passage having at least one inlet and at least one outlet. The outlet is configured for accelerating fuel exiting the fuel passage into a jet.

US6543235, which discloses the features specified in the preamble of claim 1, relates to a single circuit fuel injector apparatus having a bifurcated recirculation zone is provided. The single circuit injector includes an injector tip having an aft facing tapered surface which is communicated with a plurality of fuel injector ports.

US2010095677 relates to a pilot nozzle heat shield that includes a body having a first end for receiving a pilot nozzle and a second end including a flow tip. The body includes a plurality of internal turbulators circumferentially disposed about the internal peripheral surface of the body.

In accordance with the invention there is provided a fuel injector in accordnace with claim 1.

For example, the nose portion may be substantially dome shaped. In another example, the nose portion may be substantially cone shaped. In another example, the nose portion may be in the form of a part ellipsoid.

A spherical section of the outer surface of the injector may be arranged to interface with a seal, such as a floating seal mounted on an adjacent combustor. Flutes provided in the surface of the nose cone can allow for a metered flow of air to pass through the seal if necessary. This metered flow of air serves to form a film of air flowing nominally axially around the outer surface of the injector.

The convergent shape of the nose section provides that an air film remains attached until the tip of the injector, where it is released as a jet. The jet serves to push back a recirculation zone formed by air exiting an annular air swirler which, in use encircles the fuel injector. Velocity of air in the jet is driven by a pressure difference between air at an upstream position on the injector surface and at position just downstream of the nose section where the jet is formed. Shape, size and number of flutes on the nose section may be optimised to achieve a desired pressure difference and control the velocity of the jet.

The flutes may converge from an upstream to a downstream end. The flutes may vary in depth from an upstream to a downstream end. Optionally one flute is arranged between each circumferentially adjacent pair of outlets. In another option multiple flutes are arranged between each circumferentially adjacent pair of outlets. For example flutes may be arranged between alternate circumferentially adjacent pairs of outlets. The flutes are inclined in a circumferential direction whereby to turn the air stream in a circumferential direction.

The outlets may be arranged obliquely with respect to the elongate axis and may be directed radially outwards and in a downstream or upstream direction. The outlets may be inclined in a circumferential direction. The plurality of outlets may be arranged in an annular array nominally centred on the elongate axis. The plurality of outlets may be equally spaced from each other. For example, the plurality of outlets may comprise 4 to 10 equally spaced outlets arranged in an annular array.

The injector may further comprise a second annular cavity defined by an annular outer wall extending from downstream of the outlet end to a position upstream of the one or more outlets, the annular outer wall being convergent at a downstream end whereby to define an orifice centred nominally coincident with the elongate axis, the second annular cavity having a second annular cavity inlet at an upstream end and wherein the fuel passage outlets emerge at a radially outer surface of the annular outer wall. In use, a stream of non-swirling air enters the second annular cavity inlet, passes over the fuel passage and exits at the orifice. The convergent end of the annular outer wall assists in turning the annular air flow into a single jet of air.

The annular outer wall may comprise an array of slots arranged to receive an array of fuel passage outlets. For example, the slots may extend in-line with the elongate axis. Alternatively, the annular outer wall may comprise an array of holes through which the outlets may be arranged to protrude.

The nose portion may terminate adjacent the orifice of the annular outer wall. The nose portion may extend downstream of the fuel passage outlets. For example the nose portion is cone shaped. The end of the nose portion may be arranged slightly upstream of the orifice. The nose portion may have ribs arranged circumferentially between the outlets. These ribs may be configured to provide mechanical strength, or to allow manufacture via additive methods such as direct laser deposition.

In use, the fuel injector may be arranged nominally centrally of an annular air swirler to form a fuel spray nozzle. The annular air swirler may optionally be attached to the fuel injector, alternatively the air swirler is supported by a separate component such that it floats around the fuel injector. Such a fuel spray nozzle may comprise a component of a gas turbine engine. Optionally the fuel spray nozzle is one of a plurality of fuel injectors in the gas turbine engine. A plurality of fuel spray nozzles may be arranged in an annular array around an engine axis of a gas turbine engine. Fuel injectors in accordance with the invention may be produced using an additive layer manufacturing process (ALM). Alternatively, features could be machined into a casting to for the desired end shape.

Some embodiments of the invention will now be further described with reference to the accompanying Figures in which;
Figure 1 shows the general arrangement of a fuel spray nozzle within a gas turbine engine as is known in the prior art;
Figure 2 shows in more detail an example of a fuel spray nozzle arrangement known in the prior art;
Figure 3 shows, in section, a fuel injector in accordance with an embodiment of the invention;
Figure 4 shows a more detailed view of the fuel spray nozzle of Figure 3;
Figure 5 shows an optional embellishment of the a fuel spray nozzle in accordance with an embodiment of the invention;
Figure 6 shows a gas turbine engine into which fuel spray nozzles in accordance with the invention might usefully be used;
Figure 7 shows an example of an air swirler configuration suitable for use in a fuel spray nozzle in accordance with the invention.

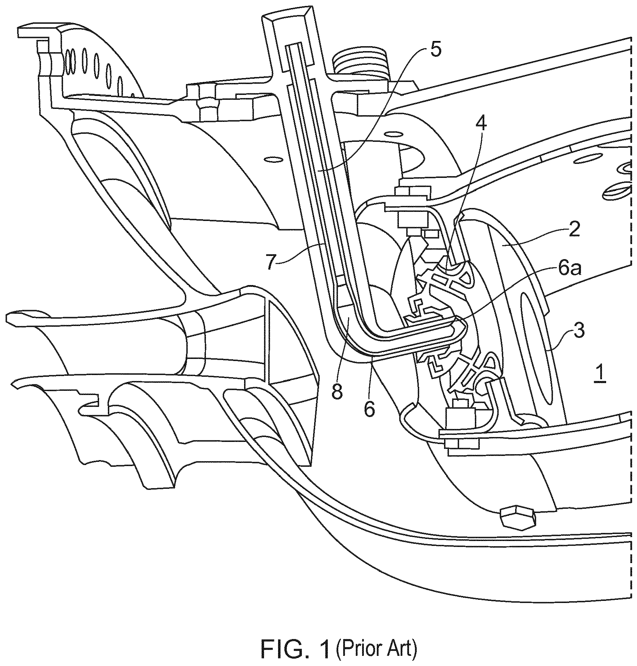

Figure 1 shows the general arrangement of a fuel nozzle within a gas turbine engine. At an upstream end of a combustor 1 is an annular combustor heatshield 2 in which is provided an annular array of holes 3 through which a mix of fuel and air is delivered to the combustor 1. Mounted to an upstream facing wall of the combustor heatshield 2 is an annular air swirler 4. A fuel feed arm 5 carries a fuel injector 6 which delivers air to the centre of an air swirler 4 through an outlet 6a. The feed arm 5 and injector 6 have a double skinned wall which defines an annular cavity 7 around the fuel line 8. This air filled cavity 7 serves as a heatshield for the fuel line 8.

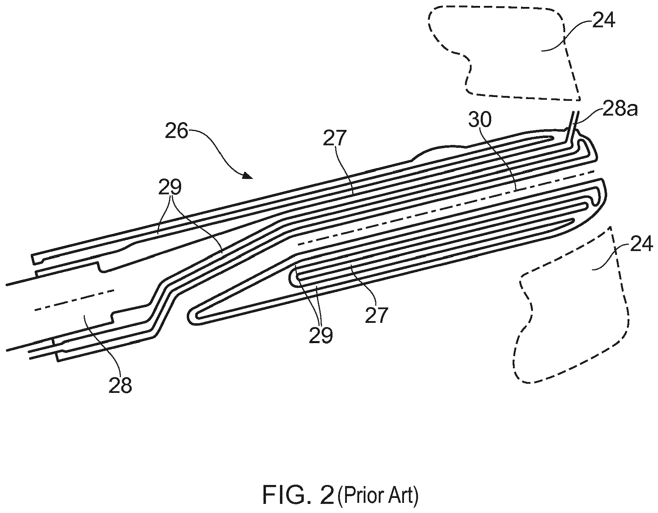

Figure 2 shows in more detail a known arrangement of fuel spray nozzle. The arrangement is an example of a jet-in-crossflow fuel spray nozzle as disclosed in EP 3 115 692 A1. A fuel injector 26 has a centrally arranged fuel line 28 which, as it approaches a downstream end of the injector 26, forms an annular fuel passage 27 having an outlet 28a. Typically the outlet 28a is one of a plurality of outlets arranged in an annular array. An annular air filled cavity 29 provides a heatshield on radially inner and radially outer walls of the annular fuel passage 27. A central channel 30 open to the downstream end serves as a conduit for a central jet of air. An annular air swirler 24 (shown in outline only) typically mounted to the combustor (not shown) sits around the injector 26.

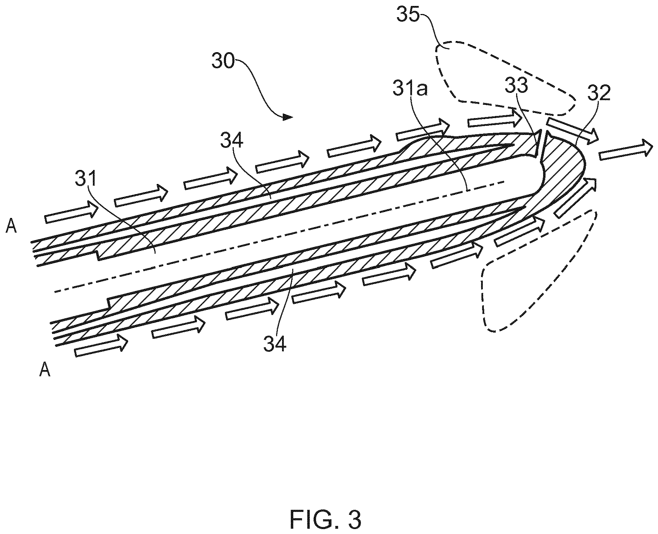

Figure 3 shows a fuel injector 30 in accordance with an embodiment of the invention. The fuel injector 30 has a centrally arranged fuel passage 31. At its downstream end, the injector has a radially convergent nose section 32 which converges towards an elongate axis 31a of the fuel passage 31. At its downstream end, the fuel passage fans out to provide an annular array of outlets 33. An annular air filled cavity 34 serves as a heatshield for the centrally arranged fuel passage 31. Where an air flow flowing in a direction substantially parallel with the elongate axis 31a is passed over the fuel injector 30, the shape of the injector 30 (in particular at the nose section 32 is such as to encourage formation and retention of an air film A on the surface of the injector 30. As illustrated by the arrows, the film A converges towards the end of the nose section 32.

In use, an annular air swirler 35 (shown in outline only) typically mounted to the combustor (not shown) sits around the injector 30. The injector 30 is joined to a fuel feed tube (not shown).

In use fuel is delivered through fuel passage 31 and exits through outlets 33. The outlets 33 are directed so as to project fuel across an air flow path which passes over the injector 30 and through air swirler 35. Annular heatshield cavity 34 is closed at the injector outlet end and contains air to insulate the fuel passage 31.

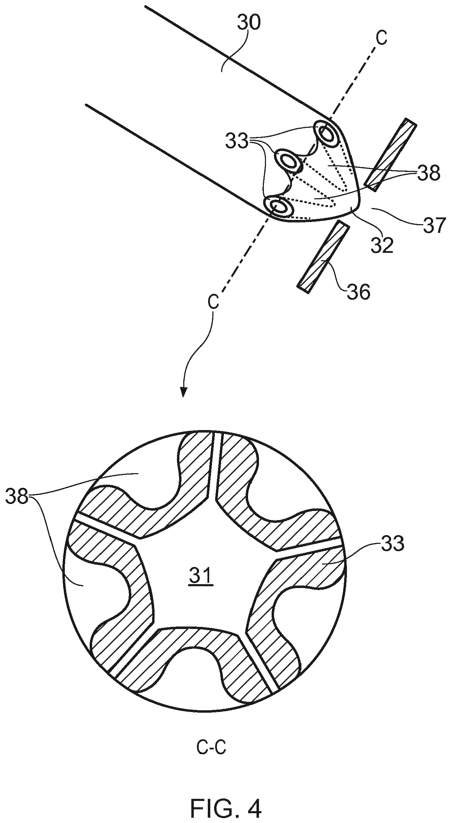

Figure 4 shows a more detailed view of the fuel injector of Figure 3. The same reference numerals are used to identify the same components. Figure 4 shows the injector 30 in a cut away view and in cross section (through plane C-C). As can be seen the injector may cooperate with a floating seal 36 which, for example, is mounted to the combustor. Optionally, the seal 36 is formed integrally with an annular air swirler (not shown). The fluted 38 surface on the convergent nose section 32 encourages air flow around the nose section 32 to form a single jet exiting through an orifice 37 in the seal 36. The orifice 37 is nominally centred on the elongate axis 31a. Between concentrically adjacent pairs of outlets 33 are flutes 38.

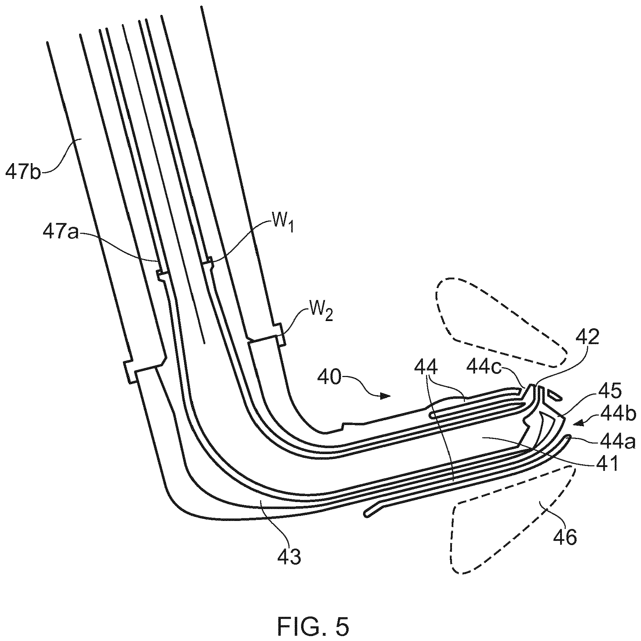

Figure 5 shows an optional embellishment of an injector in accordance with the invention. The fuel injector 40 has a centrally arranged fuel passage 41. At its downstream end, the fuel passage fans out to provide an annular array of outlets 42. An annular air filled cavity 43 serves as a heatshield for the centrally arranged fuel passage 41. Towards the outlet end of the injector an open ended annular cavity 44 is provided around the annular heatshield cavity 43. An outer wall 44a of the cavity 44 is shaped to turn an airflow passing through the channel into a single jet leaving an outlet 44b which is arranged centrally of the annular array of outlets 42. A cone shaped nose section 45 of the fuel injector projects towards the outlet 44b to assist in directing air from the open ended annular cavity towards the outlet 44b where it is shaped to form a single jet.

An annular air swirler 46 (shown in outline only) typically mounted to the combustor (not shown) sits around the injector 40. The injector 40 is joined to a double skinned fuel feed tube 47a, 47b by welds W₁ and W₂.

In use fuel is delivered through fuel passage 41 and exits through outlets 42. The outlets 42 are directed so as to project fuel across an air flow path which passes over the outer wall 44a and through air swirler 46. Annular heatshield cavity 43 is closed at the injector outlet end and contains air to insulate the fuel passage 41. In contrast, annular cavity 44 is open at the injector outlet end and a continuous stream of air is channelled through this annular cavity 44 and out through the air outlet 44b which sits just downstream of the cone shaped nose 45. The converging outer wall 44a of cavity 44 and the cone shaped nose 45 together create a single jet of air at the outlet 44b. The outer wall 44a includes an array of holes 44c which encircle protruding fuel outlets 42. Some air from the annular cavity 44 thus exits through these holes 44 insulating the outlets 42 and providing an air film that may prevent the build-up of fuel in this region reducing the incidence of local coke formation.

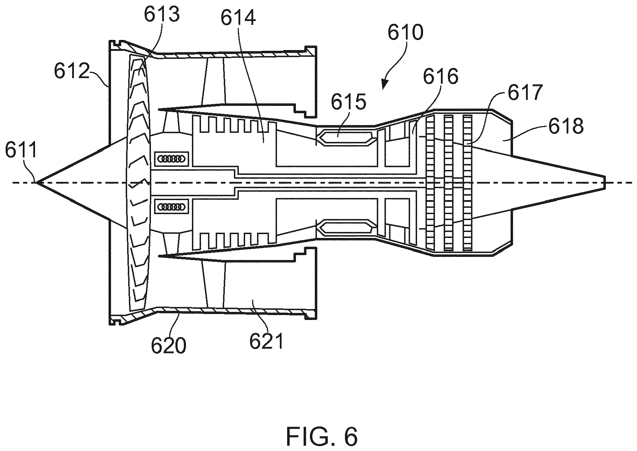

Figure 6 illustrates a gas turbine engine into which fuel injectors in accordance with the invention might usefully be used. With reference to Figure 6, a gas turbine engine is generally indicated at 610, having a principal and rotational axis 611. The engine 610 comprises, in axial flow series, an air intake 612, a propulsive fan 613, a high-pressure compressor 614, combustion equipment 615, a high-pressure turbine 616, a low-pressure turbine 617 and an exhaust nozzle 618. A nacelle 620 generally surrounds the engine 610 and defines the intake 612.

The gas turbine engine 610 works in the conventional manner so that air entering the intake 612 is accelerated by the fan 613 to produce two air flows: a first air flow into the high-pressure compressor 614 and a second air flow which passes through a bypass duct 621 to provide propulsive thrust. The high-pressure compressor 614 compresses the air flow directed into it before delivering that air to the combustion equipment 615.

In the combustion equipment 615 the air flow is mixed with fuel and the mixture combusted. The resultant hot combustion products then expand through, and thereby drive the high and low-pressure turbines 616, 617 before being exhausted through the nozzle 18 to provide additional propulsive thrust. The high 616 and low 617 pressure turbines drive respectively the high pressure compressor 614 and the fan 613, each by suitable interconnecting shaft. An array of fuel injectors in accordance with the invention may conveniently be provided at an inlet end of the combustion equipment 615.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

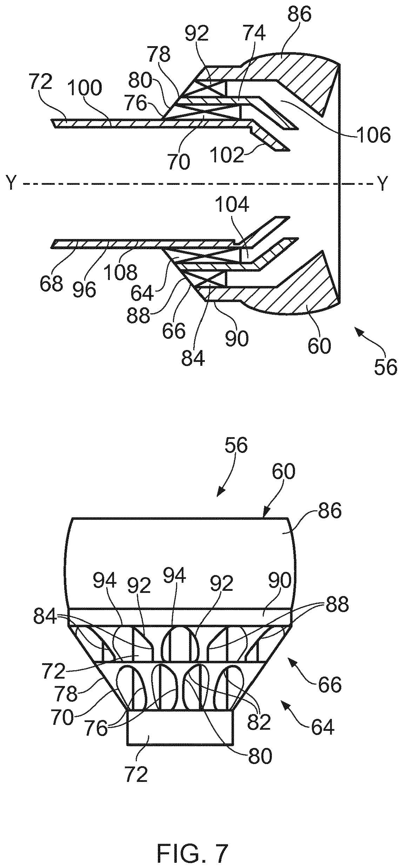

Figure 7 shows an air swirler 56 suitable for use in a fuel spray nozzle in accordance with the invention. The swirler has an axis Y and comprises a first swirler section 64, a second swirler section 66 and an additional swirler section 68. The first swirler section 64 comprises a plurality of vanes 70, a first member 72 and a second member 74. The second member 74 is arranged coaxially around the first member 72 and the vanes 70 extend radially between the first and second members 72 and 74. The vanes 70 have leading edges 76 and the second member 74 has an upstream end 78. The leading edges 76 of the vanes 70 extend with radial and axial components from the first member 72 to the upstream end 78 of the second member 74 and the radially outer ends 80 of the leading edges 76 of the vanes 70 form arches 82 with the upstream end 78 of the second member 74. In particular the leading edges 76 of the vanes 70 extend with axial downstream components from the first member 72 to the upstream end 78 of the second member 74.

The second swirler portion 66 comprises a plurality of vanes 84 and a third member 86. The third member 86 is arranged coaxially around the second member 74. The vanes 84 of the second swirler 66 extend radially between the second and third members 74 and 86. The vanes 84 of the second swirler portion 66 have leading edges 88 and the third member 86 has an upstream end 90. The leading edges 88 of the vanes 84 of the second swirler portion 66 extend with radial and axial components from the upstream end 78 of the second member 74 to the upstream end 90 of the third member 86 and the radially outer ends 92 of the leading edges 88 of the vanes 84 of the second swirler portion 66 form arches 94 with the upstream end 90 of the third member 86. In particular the leading edges 88 of the vanes 84 extend with axial downstream components from the upstream end 78 of the second member 74 to the upstream end 90 of the third member 86.

The first member 72, the second member 74 and the third member 86 are generally annular members with a common axis Y. Thus, the upstream end of the first member 72 is upstream of the upstream end 78 of the second member 74 and the upstream end 78 of the second member 74 is upstream of the upstream end 90 of the third member 86.

The outer surface of the downstream end of the first member 72 tapers/converges towards the axis Y of the fuel injector head 60. The downstream end of the second member 74 tapers/converges towards the axis Y of the fuel injector head 60 and the inner surface of the downstream end of the third member 86 initially tapers/converges towards the axis Y of the fuel injector head 60 and then diverges away from the axis Y of the fuel injector head 60. An annular passage 104 is defined between the first member 72 and the second member 74 and an annular passage 106 is defined between the second member 74 and the third member 86. A central passage 108 is defined within the first member 74 in which a fuel passage can be received in accordance with the invention.

It is seen that the fuel injector head 60 is arranged such that the leading edges 76 and 88 of the vanes 70 and 84 respectively are arranged to extend with axial downstream components from the first member 72 to the upstream end 78 of the second member 74 and from the second member 74 to the upstream end 90 of the third member 86 respectively. In addition it is seen that the fuel injector head 60 is arranged such that the radially outer ends 80 and 92 of the leading edges 76 and 88 of the vanes 70 and 84 respectively form arches 82 and 94 with the upstream ends 78 and 90 of the second and third member 74 and 86 respectively. These features enable the fuel injector head 60 and in particular the first and second swirler sections 64 and 66 of the fuel injector head 60 to be manufactured by direct laser deposition. These features enable the vanes 70 of the first swirler 64 to provide support between the first member 72 and the second member 74 and the vanes 84 of the second swirler 66 to provide support between the second member 74 and the third member 86 during the direct laser deposition process.

The skilled person will appreciate that except where mutually exclusive, a feature described in relation to any one of the above aspects of the invention may be applied mutatis mutandis to any other aspect of the invention.

It will be understood that the invention is not limited to the embodiments above-described and various modifications and improvements can be made without departing from the concepts described herein. Except where mutually exclusive, any of the features may be employed separately or in combination with any other features within the scope of the invention as defined in the appended claims.

## Claims

1. A fuel injector comprising;
an elongate fuel passage (31) having an elongate axis (31a) extending from an upstream inlet end to a downstream outlet end;
a plurality of outlets (33) at the outlet end each extending obliquely with respect to the elongate axis (31a);
the elongate fuel passage (31) defined by an inner skin of a double skinned pipe, the double skinned pipe defining a first annular cavity (34) between the inner skin and an outer skin;
the inner skin and the outer skin meeting adjacent the one or more outlets to close an end of the first annular cavity (34);
a nose section (32) at a downstream end, the nose section (32) being convergent, the fuel injector being **characterised in that** the nose section is fluted, the flutes (38) arranged between the outlets (33) and extending towards the downstream end of the nose section (32) whereby to guide an air stream (A) passing over the injector (30) to form single jet at the downstream end of the nose section (32); wherein
the flutes (38) are inclined in a circumferential direction to turn the air stream (A) in a circumferential direction.

2. A fuel injector as claimed in claim 1 wherein the nose section (32) is substantially dome shaped.

3. A fuel injector as claimed in claim 1 wherein the nose section (32) is substantially cone shaped.

4. A fuel injector as claimed in claim 1 wherein the nose section (32) is substantially in the form of a part ellipsoid.

5. A fuel injector as claimed in any preceding claim wherein each flute (38) converges from an upstream to a downstream end.

6. A fuel injector as claimed in any preceding claim wherein the flutes (38) vary in depth from an upstream to a downstream end.

7. A fuel injector as claimed in any preceding claim wherein at least one flute (38) is arranged between each circumferentially adjacent pair of outlets (33).

8. A fuel injector as claimed in any preceding claim wherein the outlets (33) are directed radially outwards and in a downstream direction.

9. A fuel injector as claimed in any preceding claim wherein the outlets (33) are inclined in a circumferential direction.

10. A fuel injector as claimed in any preceding claim wherein the plurality of outlets (33) is arranged in an annular array nominally centred on the elongate axis (31a).

11. A fuel injector as claimed in any preceding claim further comprising a second annular cavity (44) defined by an annular outer wall (44a) extending from downstream of the outlet end to a position upstream of the one or more outlets (42), the annular outer wall being convergent at a downstream end whereby to define an orifice (44b) centred nominally coincident with the elongate axis, the second annular cavity (44) having a second annular cavity inlet at an upstream end and wherein the fuel passage outlets (44c) emerge at a radially outer surface of the annular outer wall (44).

12. A fuel injector as claimed in claim 11 wherein the annular outer wall (44) comprises an array of slots (44c) arranged to receive the array of fuel passage outlets (42).

13. A fuel spray nozzle comprising a fuel injector as claimed in any preceding claim and an annular air swirler (46), wherein the fuel injector is arranged nominally centrally of the annular air swirler (46).

14. The fuel spray nozzle of Claim 13 further comprising a seal (36) arranged to limit air flow from upstream of the air swirler (46) around the injector.

15. The fuel spray nozzle of claim 14 wherein the seal (36) is mounted on or integral with one of the air swirler (46) or an adjacent combustor component.

16. A gas turbine engine comprising one or more fuel spray nozzles, the fuel spray nozzles having the configuration as claimed in any of claims 13 to 15.

17. A gas tubine engine comprising a plurality of fuel spray nozzles according to claim 14 arranged in an annular array around an engine axis of the gas turbine engine.

## Patentansprüche

1. Kraftstoffeinspritzer, umfassend:
einen länglichen Kraftstoffdurchlass (31) mit einer länglichen Achse (31a), die sich von einem stromaufwärtigen Einlassende zu einem stromabwärtigen Auslassende erstreckt;
eine Vielzahl von Auslässen (33) am Auslassende, die sich jeweils schräg bezüglich zur länglichen Achse (31a) erstrecken;
wobei der längliche Kraftstoffdurchlass (31) durch eine Innenhaut eines doppelhäutigen Rohrs definiert wird, wobei das doppelhäutige Rohr einen ersten ringförmigen Hohlraum (34) zwischen der Innenhaut und einer Außenhaut definiert;
die Innenhaut und die Außenhaut benachbart an den einen oder die mehreren Auslässe aufeinandertreffen, um ein Ende des ersten ringförmigen Hohlraums (34) zu schließen;
einen Nasenabschnitt (32) an einem stromabwärtigen Ende, wobei der Nasenabschnitt (32) konvergent ist, wobei der Kraftstoffeinspritzer **dadurch gekennzeichnet ist, dass** der Nasenabschnitt gerillt ist, wobei die Rillen (38) zwischen den Auslässen (33) angeordnet sind und sich zum stromabwärtigen Ende des Nasenabschnitts (32) erstrecken, wodurch ein über den Einspritzer (30) passierenden Luftstrom (A) zum Formen eines einzelnen Strahls am stromabwärtigen Ende des Nasenabschnitts (32) geleitet wird;
wobei die Rillen (38) in einer Umfangsrichtung geneigt sind, um den Luftstrom (A) in eine Umfangsrichtung zu wenden.

2. Kraftstoffeinspritzer nach Anspruch 1, wobei der Nasenabschnitt (32) im Wesentlichen kuppelförmig ist.

3. Kraftstoffeinspritzer nach Anspruch 1, wobei der Nasenabschnitt (32) im Wesentlichen kegelförmig ist.

4. Kraftstoffeinspritzer nach Anspruch 1, wobei der Nasenabschnitt (32) im Wesentlichen in Form eines Teilellipsoids ist.

5. Kraftstoffeinspritzer nach einem der vorstehenden Ansprüche, wobei jede Rille (38) von einem stromaufwärtigen zu einem stromabwärtigen Ende konvergiert.

6. Kraftstoffeinspritzer nach einem der vorstehenden Ansprüche, wobei die Rillen (38) von einem stromaufwärtigen zu einem stromabwärtigen Ende in der Tiefe variieren.

7. Kraftstoffeinspritzer nach einem der vorstehenden Ansprüche, wobei mindestens eine Rille (38) zwischen jedem in Umfangsrichtung benachbarten Paar Auslässe (33) angeordnet ist.

8. Kraftstoffeinspritzer nach einem der vorstehenden Ansprüche, wobei die Auslässe (33) radial nach außen und in einer stromabwärtigen Richtung gerichtet sind.

9. Kraftstoffeinspritzer nach einem der vorstehenden Ansprüche, wobei die Auslässe (33) in einer Umfangsrichtung geneigt sind.

10. Kraftstoffeinspritzer nach einem der vorstehenden Ansprüche, wobei die Vielzahl von Auslässen (33) in einer nominal auf die längliche Achse (31a) zentrierten ringförmigen Reihe angeordnet ist.

11. Kraftstoffeinspritzer nach einem der vorstehenden Ansprüche, ferner umfassend einen zweiten ringförmigen Hohlraum (44), der durch eine ringförmige Außenwand (44a) definiert wird, die sich von stromabwärts des Auslassendes zu einer Position stromaufwärts des einen oder der mehreren Auslässe (42) erstreckt, wobei die ringförmige Außenwand an einem stromabwärtigen Ende konvergent ist, wodurch eine Öffnung (44b) definiert wird, die nominal mit der länglichen Achse zusammenfällt, wobei der zweite ringförmige Hohlraum (44) einen zweiten ringförmigen Hohlraumeinlass an einem stromaufwärtigen Ende aufweist und wobei die Kraftstoffdurchlassauslässse (44c) an einer radial äußeren Fläche der ringförmigen Außenwand (44) münden.

12. Kraftstoffeinspritzer nach Anspruch 11, wobei die ringförmige Außenwand (44) eine Reihe von Schlitzen (44c) umfasst, die angeordnet sind, um die Reihe von Kraftstoffdurchlassauslässen (42) aufzunehmen.

13. Kraftstoffsprühdüse, umfassend einen Kraftstoffeinspritzer nach einem der vorstehenden Ansprüche und einen ringförmigen Luftverwirbler (46), wobei der Kraftstoffeinspritzer nominal zentral zum ringförmigen Luftverwirbler (46) angeordnet ist.

14. Kraftstoffsprühdüse nach Anspruch 13, ferner umfassend eine Dichtung (36), angeordnet, um Luftstrom stromaufwärts des Luftverwirblers (46) um den Einspritzer zu begrenzen.

15. Kraftstoffsprühdüse nach Anspruch 14, wobei die Dichtung (36) auf dem Luftverwirbler (46) oder einer benachbarten Verbrennerkomponente montiert oder einstückig damit ist.

16. Gasturbinenmotor, umfassend eine oder mehrere Kraftstoffsprühdüsen, wobei die Kraftstoffsprühdüsen die Konfiguration nach einem der Ansprüche 13 bis 15 aufweist.

17. Gasturbinenmotor, umfassend eine Vielzahl von Kraftstoffsprühdüsen nach Anspruch 14, angeordnet in einer ringförmigen Reihe um eine Motorachse des Gasturbinenmotors.

## Revendications

1. Injecteur de carburant comprenant :
un passage de carburant allongé (31) possédant un axe allongé (31a) s'étendant d'une extrémité d'entrée en amont à une extrémité de sortie en aval ;
une pluralité de sorties (33) à l'extrémité de sortie, chacune s'étendant en bais relativement à l'axe allongé (31a) ;
le passage de carburant allongé (31), défini par une paroi intérieure d'un tuyau à double paroi, le tuyau à double paroi définissant une première cavité annulaire (34) entre la paroi intérieure et une paroi extérieure ;
la paroi intérieure et la paroi extérieure se joignant en un point adjacent à une ou plusieurs sorties pour fermer une extrémité de la première cavité annulaire (34) ;
une section de nez (32) à une extrémité en aval, la section de nez (32) étant convergente, l'injecteur de carburant étant **caractérisé en ce que** la section de nez est cannelée, les cannelures (38) étant agencées entre les sorties (33) et s'étendant vers l'extrémité en aval de la section de nez (32), de façon à guider un flux d'air (A) passant au-dessus de l'injecteur (30) pour former un jet unique à l'extrémité en aval de la section de nez (32) ;
les cannelures (38) étant inclinées dans une direction circonférentielle pour tourner le flux d'air (A) dans une direction circonférentielle.

2. Injecteur de carburant selon la revendication 1, la section de nez (32) ayant une forme substantiellement bombée.

3. Injecteur de carburant selon la revendication 1, la section de nez (32) ayant une forme substantiellement conique.

4. Injecteur de carburant selon la revendication 1, la section de nez (32) ayant une forme substantiellement ellipsoïdale.

5. Injecteur de carburant selon une quelconque des revendications précédentes, chaque cannelure (38) convergeant d'une extrémité en amont à une extrémité en aval.

6. Injecteur de carburant selon une quelconque des revendications précédentes, la profondeur des cannelures (38) variant d'une extrémité en amont à une extrémité en aval.

7. Injecteur de carburant selon une quelconque des revendications précédentes, au moins une cannelure (38) étant agencée entre chaque paire circonférentiellement adjacente de sorties (33).

8. Injecteur de carburant selon une quelconque des revendications précédentes, les sorties (33) étant dirigées radialement vers l'extérieur et dans une direction en aval.

9. Injecteur de carburant selon une quelconque des revendications précédentes, les sorties (33) étant inclinées dans une direction circonférentielle.

10. Injecteur de carburant selon une quelconque des revendications précédentes, la pluralité de sorties (33) étant disposée dans un agencement annulaire centré naturellement sur l'axe allongé (31a).

11. Injecteur de carburant selon une quelconque des revendications précédentes, comprenant en outre une deuxième cavité annulaire (44) définie par une paroi extérieure annulaire (44a) s'étendant d'une position en aval de l'extrémité de sortie à une position en amont de l'une ou plusieurs sorties (42), la paroi extérieure annulaire étant convergente à une extrémité en aval, de façon à définir un orifice (44b) centré de façon nominalement coïncidente à l'axe allongé, la deuxième cavité annulaire (44) possédant une deuxième entrée de cavité annulaire à une extrémité en amont, et les sorties de passage de carburant (44c) émergeant à une surface radialement extérieure de la paroi extérieure annulaire (44).

12. Injecteur de carburant selon la revendication 11, la paroi extérieure annulaire (44) comprenant un réseau de fentes (44c) agencé pour recevoir la série de sorties de passage de carburant (42).

13. Buse de dispersion de carburant comprenant un injecteur de carburant selon une quelconque des revendications précédentes, et un dispositif de tourbillonnement d'air annulaire (46), l'injecteur de carburant étant agencé nominalement au centre du dispositif de tourbillonnement d'air annulaire (46).

14. Buse de dispersion de carburant selon la revendication 13, comprenant en outre une garniture d'étanchéité (36) agencée pour limiter le débit d'air provenant de l'amont du dispositif de tourbillonnement d'air (46) autour de l'injecteur.

15. Buse de dispersion de carburant selon la revendication 14 la garniture d'étanchéité (36) étant montée sur un des suivants : dispositif de tourbillonnement d'air (46) ou composant de combustion adjacent, ou incorporée dans celui-ci.

16. Moteur à turbine à gaz comprenant une ou plusieurs buses de dispersion de carburant, les buses de dispersion de carburant ayant une configuration selon une quelconque des revendications 13 à 15.

17. Moteur à turbine à gaz comprenant une pluralité de buses de dispersion de carburant selon la revendication 14, agencées de façon annulaire autour d'un axe de moteur du moteur à turbine à gaz.
